# EUROPÄISCHE PATENTSCHRIFT

(11) **EP 2 493 947 B1**
(45) Veröffentlichungstag und Bekanntmachung des Hinweises auf die Patenterteilung: **20.11.2013**
(21) Anmeldenummer: 10762922.2
(22) Anmeldetag: 07.10.2010
(51) Int. Cl.: C08G 18/18, C08G 18/22, C08G 18/24, C08G 18/71

(54) **VERWENDUNG VON SALZEN VERZWEIGTER FETTSÄUREN ALS KATALYSATOR ZUR UMSETZUNG VON STERNFÖRMIGEN ALKOHOLEN MIT ISOCYANATEN**
USE OF SALTS OF BRANCHED FATTY ACIDS AS CATALYSTS FOR CONVERTING STAR-SHAPED ALCOHOLS USING ISOCYANATES
UTILISATION DE SELS D'ACIDES GRAS RAMIFIÉS EN TANT QUE CATALYSEURS POUR LA TRANSFORMATION D'ALCOOLS EN FORME D'ÉTOILE AU MOYEN D'ISOCYANATES

(30) Priorität: 28.10.2009 DE 102009046074
(43) Veröffentlichungstag der Anmeldung: 05.09.2012
(73) Patentinhaber: Henkel AG & Co. KGaA, 40589 Düsseldorf (DE)
(72) Erfinder: LUNEAU, Benoit, 40225 Düsseldorf (DE); ZANDER, Lars, 41569 Rommerskirchen (DE); TENHAEF, Rolf, 40627 Düsseldorf (DE); WARKOTSCH, Nadine, 40593 Düsseldorf (DE); GIESEN, Brigitte, 40625 Düsseldorf (DE)
(86) Internationale Anmeldenummer: PCT/EP2010/065012
(87) Internationale Veröffentlichungsnummer: WO 2011/051092

(56) Entgegenhaltungen:
- EP-A1- 1 314 747
- EP-A1- 1 870 424
- WO-A1-2004/000905
- DE-A1-102004 011 348
- DE-A1-102007 039 649
- GB-A- 2 300 639
- US-A- 4 515 933
- US-B1- 6 362 302

## Beschreibung

Die vorliegende Erfindung betrifft die Verwendung von Salzen verzweigter Fettsäuren zur Katalyse der Umsetzung von sternförmigen Alkoholen mit Isocyanaten.

Zur Umsetzung von sternförmigen Alkoholen mit Isocyanaten sind verschiedene Katalysatoren im Stand der Technik bekannt. Bevorzugte Katalysatoren stellen hierbei tertiäre Amine wie , Diazabicyclooctan (DABCO) und zinnorganische Verbindungen, z. B. Dialkylzinn(IV)salze von aliphatischen Carbonsäuren wie Dibutylzinndilaurat und Dibutylzinndioctoat, dar siehe Patent DE 10 2007 039648. Ein Problem bei der Verwendung dieser Katalysatoren besteht allerdings darin, dass sie ebenfalls unerwünschte Nebenreaktionen katalysieren, wie beispielsweise die Trimerisierung von Isocyanaten. Vor allem beim Einsatz von Silyl-Gruppen tragenden Isocyanaten besteht weiterhin das Problem, dass ebenfalls die Reaktion von Silyl-Gruppen untereinander katalysiert wird, was zu unerwünschten Folgereaktionen der Reaktionsprodukte führen kann.

Erfindungsgemäß wurde nun überraschenderweise gefunden, dass Salze verzweigter Fettsäuren deutlich bessere Katalyseeigenschaften hinsichtlich der Umsetzung dieser sternförmigen Alkohole mit Isocyanaten, die eine Silyl-Gruppe tragen, aufweisen als die zu diesem Zweck bisher eingesetzten Katalysatoren.

Der Einsatz solcher Salze zur Umsetzung von Alkoholen mit Isocyanaten ist zwar aus dem Stand der Technik schon bekannt, jedoch war es überraschend, dass sterisch anspruchsvolle verzweigte Verbindungen wie sternförmige Alkohole so effektiv durch diese Salze umgesetzt werden können.

Besonders überraschend war hierbei insbesondere, dass mit einer geringeren Menge an Katalysator bei geringerer Reaktionszeit eine fast vollständige Umsetzung der Hydroxy-Gruppen des sternförmigen Alkohols mit Isocyanat-Gruppen erreicht werden kann.

Überraschend war hierbei weiterhin, dass bei Einsatz dieses Katalysators fast keine unerwünschten Nebenreaktionen auftreten, insbesondere auch bei Einsatz von Silyl-Gruppen tragenden Isocyanaten.

Ein erster Vorteil ist daher, dass bei Verwendung eines erfindungsgemäßen Katalysators geringere Mengen an Katalysator eingesetzt werden müssen, als bei Verwendung eines bisher üblicherweise eingesetzten Katalysators.

Ein weiterer Vorteil ist, dass das erhältliche Reaktionsprodukt aufgrund der geringen Menge an einzusetzendem Katalysator weitgehend frei von Katalysatoren ist, was insbesondere mit Hinblick darauf, dass die nachträgliche Entfernung des Katalysators sehr aufwendig und teuer ist, von besonderem Vorteil ist. Ein weiterer Vorteil ist hierbei insbesondere, dass das Reaktionsprodukt aufgrund der Abwesenheit von Aminen und Zinn-Ionen, die bei Einsatz bisher üblicher Katalysatoren wie DABCO oder Dibutylzinndilaurat zwangsläufig auch im Endprodukt enthalten sind, davor bewahrt wird, aufgrund von Folgereaktionen in unerwünschte Nebenprodukte überführt zu werden und aus diesem Grund auch eine sehr viel bessere Lagerstabilität aufweist.

Ein weiterer Vorteil ist, dass das Reaktionsprodukt aufgrund der fast quantitativen Umsetzung der Hydroxy-Gruppen mit Isocyanat-Gruppen praktisch keine freien Hydroxy-Gruppen mehr enthält, so dass das Reaktionsprodukt frei von reaktiven Gruppen ist, die ebenfalls unerwünschte Nebenreaktionen eingehen könnten.

Ein weiterer Vorteil ist, dass bei Einsatz des erfindungsgemäßen Katalysators auch bereits das unmittelbar erhältliche Reaktionsprodukt zumindest weitgehend frei von Nebenprodukten ist und nicht nur anschließende Folgereaktionen unterbunden werden.

Ein erster Gegenstand der vorliegenden Erfindung ist daher die Verwendung eines Salzes verzweigter Fettsäuren zur Katalyse der Umsetzung von sternförmigen Alkoholen mit IsocyanatVerbindungen, die eine Silyl-Gruppe tragen.

Weiterer Gegenstand der vorliegenden Erfindung ist ein Verfahren zur Herstellung von sternförmigen Polymeren durch Umsetzung eines sternförmigen Alkohols mit Isocyanat-Verbindungen, die eine Silyl-Gruppe tragen, dadurch gekennzeichnet, dass zur Katalyse der Reaktion ein Salz verzweigter Fettsäuren eingesetzt wird.

Ein weiterer Gegenstand der vorliegenden Erfindung sind ebenso sternförmige Polymere erhältlich durch Umsetzung von sternförmigen Alkoholen mit Isocyanat-Verbindungen, die eine Silyl-Gruppe tragen, in Anwesenheit von Salzen verzweigter Fettsäuren sowie eine Zusammensetzung, die erfindungsgemäße sternförmige Polymere enthält.

Die erfindungsgemäßen sternförmigen Polymere zeichnen sich vorzugsweise dadurch aus, dass sie weniger als 0,1 Gew.-%, insbesondere weniger als 0,05 Gew.-%, vorzugsweise weniger als 0,03 Gew.-%, vor allem weniger als 0,02 Gew.-%, an Katalysator umfassen. Sie zeichnen sich weiterhin vorzugsweise dadurch aus, dass mindestens 95 %, insbesondere mindestens 96 oder 97 %, vor allem mindestens 98 oder 99 %, besonders bevorzugt sämtliche Hydroxy-Gruppen der sternförmigen Alkohole mit Isocyanat-Verbindungen umgesetzt wurden. Sie zeichnen sich weiterhin vorzugsweise dadurch aus, dass sie weitgehend, vorzugsweise vollkommen, frei von Amin- und Zinn-Verbindungen sind und/oder äußerst lagerstabil sind. Sie zeichnen sich außerdem vorzugsweise dadurch aus, dass sie keine toxischen Substanzen enthalten.

Die verzweigten Fettsäuren des erfindungsgemäß einzusetzenden Salzes sind vorzugsweise ausgewählt aus C₃₋₂₄-Fettsäuren, insbesondere C₄₋₂₀-Fettsäuren, besonders bevorzugt aus C₆₋₁₆-Fettsäuren. Besonders bevorzugt handelt es sich bei der verzweigten Fettsäure um eine Octansäure, insbesondere um 2-Ethylhexansäure, oder um eine Decansäure, insbesondere um Neodecansäure.

Die Gegenionen des erfindungsgemäß einzusetzenden Salzes sind erfindungsgemäß vorzugsweise ausgewählt aus Zn(II) und Bi(III).

Das erfindungsgemäß einzusetzende Salz liegt in einer bevorzugten Ausführungsform in Form eines mehrkernigen Komplexes vor.

Erfindungsgemäß bevorzugte Katalysatoren sind unter den Handelsnamen Borchi Kat 22 (CAS 68551-44-0; Zinkoctoat 22 Gew.-%, C₆₋₁₉-Fettsäuren 78 Gew.-%) und Borchi Kat 24 (CAS 67874-71-9; Bismuth 2-Ethylhexanoat 75 Gew.-%, C₃₋₂₄-Fettsäuren 25 Gew.-%) kommerziell erhältlich.

In einer bevorzugten Ausführungsform werden als sternförmige Alkohole sternförmige Polymere eingesetzt, die periphere Hydroxy-Gruppen aufweisen.

Als sternförmige Alkohole werden erfindungsgemäß besonders bevorzugt Verbindungen der Formel Z(-X-A-Y-OH)ₘ eingesetzt, wobei
Z für eine zentrale Verzweigungseinheit steht, welche die maximale Armanzahl der sternförmigen Polymere festlegt,
A für einen hydrophilen Polymerarm steht,
X und Y unabhängig voneinander für eine chemische Bindung oder einen zweiwertigen, niedermolekularen organischen Rest mit vorzugsweise 1 bis 50, insbesondere 2 bis 20 C-Atomen stehen,
m für eine Zahl von 3 bis 500.000 steht und vorzugsweise mit der Armanzahl von Z übereinstimmt, und die m (-X-A-Y-OH)-Gruppen voneinander unabhängig verschiedene Bedeutung besitzen können.

Bei der zentralen Verzweigungseinheit erfindungsgemäßer sternförmiger Polymere handelt es sich vorzugsweise um eine niedermolekulare organochemische Zentraleinheit oder ein anorganisches oxidisches Nanoteilchen.

Für den Fall, dass es sich bei der Zentraleinheit um eine niedermolekulare organochemische Zentraleinheit handelt, nimmt m vorzugsweise einen Wert von 3 bis 100, insbesondere 3 bis 50, besonders bevorzugt 3 bis 20, insbesondere 3 bis 10, vor allem einen Wert von 3, 4, 5, 6, 7, 8, 9 oder 10, an.

Für den Fall, dass es sich bei der Zentraleinheit um ein anorganisches oxidisches Nanoteilchen handelt, nimmt m vorzugsweise einen Wert von 3 bis 500 000, insbesondere 5 bis 250000, vor allem 10 bis 100000, an.

Bei der niedermolekularen organochemischen Zentraleinheit handelt es sich vorzugsweise um ein Polyol mit mindestens 3, vorzugsweise 3 bis 20, besonders bevorzugt 3 bis 10, insbesondere 3, 4, 5, 6, 7, 8, 9 oder 10, OH-Gruppen, die in dem verzweigten Molekül vorzugsweise die Verknüpfung zu den hydrophilen Armen ausbilden. Es kann sich hierbei insbesondere um Ether- oder EsterBindungen handeln. Bei dem Polyol kann es sich hierbei insbesondere um ein monomeres oder oligomeres sowie gegebenenfalls reduziertes Zuckermolekül handeln. Das Polyol kann hierbei insbesondere ausgewählt sein aus Glycerin, Threit, Erythrit, Arabit, Adonit, Xylit, Sorbit, Mannit, Dulcit, Arabinose, Ribose, Xylose, Glucose, Mannose, Galactose, Fructose, Rhamnose, Fucose, Saccharose, Maltose, Trehalose, Cellobiose, Melibiose und Gentiobiose. Anstelle von Polyolen können auch beliebige andere Verzweigungseinheiten mit reaktiven Gruppen verwendet werden, die durch Umsetzung mit Molekülen mit komplementären reaktiven Gruppen zu verzweigten Molekülen umgesetzt werden können.

Bei dem anorganischen oxidischen Nanoteilchen handelt es sich vorzugsweise um ein Silica-, Zinkoxid-, Aluminiumoxid-, Zirkonoxid-, Calciumcarbonat-, Titandioxid-, Kohlenstoff-, Magnesiumoxid- oder Eisenoxid-Nanoteilchen. Die Nanoteilchen sind entweder kommerziell erhältlich oder werden in-situ oder ex-situ vorzugsweise durch Sol-Gel-Verfahren, Fällung aus wässriger und nicht wässriger Lösung, Gasphasensynthese (Flammenpyrrolyse, Chemical Vapour Deposition, etc.), mechanische Bearbeitung (z.B. Mahlen, Ultraschall) hergestellt. Besonders bevorzugt besitzen diese eine Größe von 0,5 bis 200 nm, ganz besonders bevorzugt von 0,5 bis 20 nm.

Im Falle der Verwendung oxidischer Nanoteilchen als Zentraleinheit werden die Polymerarme vorzugsweise über hydrolysierbare Silylendgruppen an die Nanoteilchen-Obefläche angebunden. Eine Anbindung kann jedoch auch über andere mit der Oberfläche reaktive Gruppen wie beispielsweise Carboxylgruppen, kationische Gruppen (z.B. Trialkylammoniumgruppen), Phosphonatgruppen, etc. erfolgen. Besonders zur Einführung der Polymerarme am Nanopartikel geeignet sind lineare Polyoxyalkylendiole, deren beide OH-Gruppen mit gegenüber OH-Gruppen reaktiven Silanen, wie beispielsweise Isocyanatosilanen umgesetzt sind. Andere zur Einführung der Polymerarme am Nanopartikel geeignete Verbindungen umfassen Polyether-Polyol beispielsweise VORANOL®, TERRALOX®, SYNALOX® und DOWFAX® der Dow-Chemical Corporation, SORBETH® der Glyco-Chemicals Inc., GLUCAM® der Amerchol Corp., oder Lupranol® und Pluronic® der BASF.

Bei den hydrophilen Armen des erfindungsgemäßen sternförmigen Polymers, und insbesondere bei dem Rest A, handelt es sich erfindungsgemäß vorzugsweise um Einheiten, die hydrophile Polymer-Einheiten umfassen und/oder aus diesen bestehen, wobei die hydrophilen Polymer-Einheiten vorzugsweise ausgewählt sind aus Poly-C₂-C₄-alkylenoxiden, Polyoxazolidonen, Polyvinylalkoholen, Homo- und Copolymeren, die wenigstens 50 Gew.-% N-Vinylpyrrolidon einpolymerisiert enthalten, Homo- und Copolymeren, die wenigstens 30 Gew.-% Acrylamid und/oder Methacrylamid einpolymerisiert enthalten, Homo- und Copolymeren, die wenigstens 30 Gew.-% Acrylsäure und/oder Methacrylsäure einpolymerisiert enthalten. Hierbei sind besonders bevorzugt Polymerarme, die aus Polyethylenoxid oder Ethylenoxid/Propylenoxid-Copolymeren bestehen. Werden die ganz besonders bevorzugten Ethylenoxid/Propylenoxid-Copolymeren eingesetzt, so empfiehlt sich ein Propylenoxidanteil von höchstens 60 Gew.-% vorzugsweise höchstens 30 Gew.-% und besonders bevorzugt 10-25 Gew.-%.

Die hydrophilen Arme weisen vorzugsweise ein Molekulargewicht von 500 bis 30.000 g/mol auf, besonders bevorzugt von 1000 bis 25.000 g/mol, vor allem von 2000 bis 20.000 g/mol, insbesondere von 2000 bis 5000 g/mol oder von 15.000 bis 20.000 g/mol.

Beispiele für zweiwertige, niedermolekulare organische Reste, für die X und Y stehen können, sind aliphatische, heteroaliphatische, araliphatische, heteroaraliphatische, cycloaliphatische, cycloheteroaliphatische sowie aromatische und heteroaromatische Reste. Die niedermolekularen Reste können linear oder verzweigt sein sowie insbesondere Stickstoffatome und CarbonylGruppen umfassen. Besonders bevorzugt sind kurzkettige aliphatische und heteroaliphatische Reste. Beispiele für geeignete Reste sind die Reste -Ethyl-, Propyl-, -Butyl-, -Aminoethyl-, - Aminopropyl-, -Aminobutyl-, -N-(2-Aminoethyl)(3-aminopropyl)-, -3-Methacryloxypropyl-, - Methacryloxymethyl-, -3-Acryloxypropyl-, -3-Isocyanatopropyl-, -Isocyanatomethyl-, - Butyraldehyde-, -3-Glycidoxypropyl-, -Propylbernsteinsäureanhydrid-, -Chloromethyl-, -3-Chloropropyl- und -Hydroxymethyl-.

Als Isocyanat-Verbindungen werden erfindungsgemäß solche eingesetzt, die eine Silyl-Gruppe tragen, wobei es sich bei der Silyl-Gruppe vorzugsweise um eine solche der allgemeinen Formel -CR^{a}₂-Si(OR^{b})ᵣ(R^{c})₃₋ᵣ handelt, wobei R^{a} für Wasserstoff oder eine lineare oder verzweigte Alkylgruppe mit 1 bis 6 Kohlenstoffatomen steht, OR^{b} für eine hydrolysierbare Gruppe steht, R^{c} für eine lineare oder verzweigte Alkylgruppe mit 1 bis 6 Kohlenstoffatomen steht und r für eine Zahl von 1 bis 3 steht. R^{b} steht vorzugsweise für eine lineare oder verzweigte Alkylgruppe mit 1 bis 6 Kohlenstoffatomen.

In erfindungsgemäßen Verfahren wird das Salz verzweigter Fettsäuren vorzugsweise in einer Menge von 0,001 bis 5 Gew.-%, insbesondere in einer Menge von 0,005 bis 2 Gew.-%, besonders bevorzugt in einer Menge von 0,01 bis 0,2 Gew.-%, insbesondere in einer Menge von 0,01 bis 0,05 Gew.-% eingesetzt.

Die Reaktionszeit beträgt vorzugsweise 4 bis 15 Stunden, insbesondere 4 bis 10 Stunden, besonders bevorzugt 4 bis 6 Stunden, vor allem 4 bis 5 Stunden, insbesondere etwa 4,5 Stunden.

Die Reaktion wird vorzugsweise bei einer Temperatur von 40 bis 120°C, insbesondere bei einer Temperatur von 70 bis 110°C, vor allem bei einer Temperatur von 80 bis 100°C durchgeführt.

Bei den durch ein erfindungsgemäßes Verfahren erhältlichen sternförmigen Polymeren handelt es sich entsprechend vorzugsweise um Verbindungen der Formel Z(-X-A-Y-O-C(O)-NH-R¹)ₘ, wobei Z, X, A und Y die zuvor angegebenen Bedeutungen haben und R¹ für den Rest der eingesetzten Isocyanat-Verbindungen steht, wobei die m (-X-A-Y-O-C(O)-NH-R¹)-Gruppen voneinander unabhängig verschiedene Bedeutung besitzen können, insbesondere etwa auch dann, wenn Mischungen unterschiedlicher Isocyanat-Verbindungen eingesetzt werden.

R¹ kann erfindungsgemäß entsprechend für jeden beliebigen Rest stehen, umfasst jedoch vorzugsweise eine funktionelle Gruppe, besonders bevorzugt eine Silylgruppe, insbesondere die zuvor genannte Silylgruppe der allgemeinen Formel -CR^{a}₂-SI(OR^{b})ᵣ(R^{c})₃₋ᵣ.

Die erfindungsgemäß erhältlichen sternförmigen Polymere weisen vorzugsweise ein zahlenmittleres Molekulargewicht im Bereich von 1000 bis 100.000, besonders bevorzugt 2000 bis 50.000 und ganz besonders bevorzugt 5.000 bis 30.000 g/mol auf.

Ein weiterer Gegenstand der vorliegenden Erfindung ist die Verwendung erfindungsgemäßer sternförmiger Polymere in Wasch- und Reinigungsmitteln, kosmetischen Mitteln, Dicht- und Klebstoffen und Oberflächenbehandlungsmitteln.

Ein weiterer Gegenstand der vorliegenden Erfindung sind Zusammensetzungen, enthaltend erfindungsgemäße sternförmige Polymere.

In einer bevorzugten Ausführungsform handelt es sich bei den Zusammensetzungen um wässrige oder ethanolische Lösungen erfindungsgemäßer sternförmiger Polymere.

In einer weiteren bevorzugten Ausführungsform handelt es sich bei den Zusammensetzungen um Wasch- und Reinigungsmittel, kosmetische Mittel, Dicht- und Klebstoffe oder Oberflächenbehandlungsmittel.

### Ausführungsbeispiele

### Beispiel 1: Herstellung sternförmiger Polymere

Eine Mischung aus dreiarmigen und achtarmigen sternförmigen Polyetherpolyolen (Voranol 4053, Dow Chemical) wurde vorgelegt und mit Silyl-Gruppen enthaltenden Isocyanat-Verbindungen ((3-Isocyanatopropyl)triethoxysilan, IPTES) unter Anwesenheit unterschiedlicher Katalysatoren umgesetzt. Als erfindungsgemäß verwendbare Katalysatoren wurden Borchikat 22 und Borchikat 24 eingesetzt. Als Referenz wurde der üblicherweise eingesetzte Katalysator DABCO verwendet. Die Isocyanat-Verbindungen wurden äquimolar zu den Hydroxy-Gruppen der sternförmigen Polymere eingesetzt.

Zwecks Herstellung der Polymere wurde zu getrocknetem Voranol 4053 (490,6 g; 39,6 mmol) bei 80°C unter Rühren IPTES (70,1 mol) langsam hinzugegeben. Nach Beendigung der Zugabe von IPTES wurde der Katalysator in die Reaktionsmischung gegeben. Die Reaktionsmischung wurde anschließend bei 90°C weiter gerührt.

Die Reaktionskontrolle erfolgte durch NCO-Titration. Idealerweise soll die Reaktion soweit laufen, bis eine vollständige Umsetzung der Isocyanat-Verbindungen erfolgt ist. Bei Einsatz von Borchikat 22 und Borchikat 24 als Katalysator konnte bereits nach 4,5 Stunden eine fast vollständige Umsetzung der Isocyanat-Verbindungen erreicht werden, obwohl der Katalysator in einer deutlich geringeren Menge als DABCO eingesetzt wurde. Bei Einsatz von DABCO als Katalysator verblieb hingegen selbst nach 9,5 Stunden Reaktionszeit noch ein beträchtlicher Anteil nicht umgesetzter Isocyanat-Verbindungen im Reaktionsgemisch.

Außerdem konnte beobachtet werden, dass bei Einsatz von Salzen verzweigter Fettsäuren als Katalysator (Borchikat 22 und Borchikat 24) das Reaktionsprodukt selbst bei dreiwöchiger Lagerung bei 40°C nur eine leichte Viskositätszunahme zeigte, während das Reaktionsprodukt, das unter Einsatz von DABCO als Katalysator erhalten wurde, eine deutlich stärkere Viskositätszunahme zeigte, was vermutlich auf Folgereaktionen innerhalb des erhaltenen Reaktionsproduktes zurückzuführen ist.

| Polyol | Katalysator | Kat.-Menge | Reaktionszeit | NCO-Endwert | Visk. 4 Tage | Visk. 3 Wo, 23°C | Visk. 3 Wo, 40°C |
|---|---|---|---|---|---|---|---|
| Voranol 4053 | DABCO | 0,22 Gew.-% | 9,5 Stunden | 0,22 % | 4800 mPas | 6800 mPas | 40000 mPas |
| Voranol 4053 | Borchikat 22 | 0,02 Gew.-% | 4,5 Stunden | 0,02 % | 6200 mPas | 9800 mPas | 14600 mPas |
| Voranol 4053 | Borchikat 24 | 0,04 Gew.-% | 4,5 Stunden | 0,00 % | 7600 mPas | 21200 mPas | 18400 mPas |

## Patentansprüche

1. Verfahren zur Herstellung von sternförmigen Polymeren durch Umsetzung eines sternförmigen Alkohols mit Isocyanat-Verbindungen, die eine Silyl-Gruppe tragen, **dadurch gekennzeichnet, dass** zur Katalyse der Reaktion ein Salz verzweigter Fettsäuren eingesetzt wird.

2. Verfahren nach Anspruch 1, **dadurch gekennzeichnet, dass** als Katalysator ein Salz einer verzweigten C₃₋₂₄-Fettsäure eingesetzt wird und die Gegenionen des Salzes ausgewählt sind aus Zn(II) und Bi(III).

3. Verfahren nach Anspruch 1 oder 2, **dadurch gekennzeichnet, dass** es sich bei dem sternförmigen Alkohol um ein sternförmiges Polymer mit peripheren Hydroxy-Gruppen handelt.

4. Verfahren nach vorhergehendem Anspruch, **dadurch gekennzeichnet, dass** als sternförmige Alkohole Verbindungen der Formel Z(-X-A-Y-OH)ₘ eingesetzt werden, wobei
Z für eine zentrale Verzweigungseinheit steht, welche die maximale Armanzahl der sternförmigen Polymere festlegt,
A für einen hydrophilen Polymerarm steht,
X und Y unabhängig voneinander für eine chemische Bindung oder einen zweiwertigen, niedermolekularen organischen Rest mit vorzugsweise 1 bis 50, insbesondere 2 bis 20 C-Atomen stehen,
m für eine Zahl von 3 bis 500.000 steht und vorzugsweise mit der Armanzahl von Z übereinstimmt,
und die m X-A-Y-OH-Gruppen voneinander unabhängig verschiedene Bedeutung besitzen können.

5. Verfahren nach einem der vorhergehenden Ansprüche, **dadurch gekennzeichnet, dass** es sich bei der Silyl-Gruppe um eine solche der allgemeinen Formel -CR^{a}₂-Si(OR^{b})ᵣ(R^{c})₃₋ᵣ handelt, wobei R^{a} für Wasserstoff oder eine lineare oder verzweigte Alkylgruppe mit 1 bis 6 Kohlenstoffatomen steht, OR^{b} für eine hydrolysierbare Gruppe steht, R^{c} für eine lineare oder verzweigte Alkylgruppe mit 1 bis 6 Kohlenstoffatomen steht und r für eine Zahl von 1 bis 3 steht.

6. Sternförmige Polymere erhältlich durch Umsetzung von sternförmigen Alkoholen mit Isocyanat-Verbindungen, die eine Silyl-Gruppe tragen, in Anwesenheit von Salzen verzweigter Fettsäuren.

7. Sternförmige Polymere nach vorhergehendem Anspruch, **dadurch gekennzeichnet, dass** die Zusammensetzung weniger als 0,1 Gew.%, insbesondere weniger als 0,05 Gew.%, vorzugsweise weniger als 0,03 Gew.%, vor allem weniger als 0,02 Gew.-%, an Katalysator enthält.

8. Sternförmige Polymere nach einem der vorhergehenden Ansprüche, **dadurch gekennzeichnet, dass** mindestens 95 %, insbesondere mindestens 96 oder 97 %, vor allem mindestens 98 oder 99 %, besonders bevorzugt sämtliche Hydroxy-Gruppen der sternförmigen Alkohole mit Isocyanat-Verbindungen umgesetzt wurden.

9. Zusammensetzung enthaltend sternförmige Polymere nach einem der Ansprüche 6 bis 8.

## Claims

1. A process for manufacturing star-shaped polymers by reacting a star-shaped alcohol with isocyanate compounds that carry a silyl group, **characterized in that** a salt of branched fatty acids is employed for catalyzing the reaction.

2. The process according to claim 1, **characterized in that** a salt of a branched C₃₋₂₄ fatty acid is employed as the catalyst and the counter ions of the salt are selected from Zn(II) and Bi(III).

3. The process according to claim 1 or 2, **characterized in that** the star-shaped alcohol is a star-shaped polymer containing peripheral hydroxyl groups.

4. The process according to the previous claim, **characterized in that** compounds of the formula Z(-X-A-Y-OH)ₘ are employed as the star-shaped alcohols, wherein
Z stands for a central branch moiety that determines the maximum number of arms of the star-shaped polymers,
A stands for a hydrophilic polymeric arm,
X and Y stand independently of one another for a chemical bond or for a divalent, low molecular weight organic group having preferably 1 to 50, especially 2 to 20 carbon atoms,
m stands for a number from 3 to 500 000 and preferably is in agreement with the number of arms of Z,
and the m X-A-Y-OH groups independently of each other can have different meanings.

5. The process according to the previous claim, **characterized in that** the silyl group is of the general formula -CR^{a}₂-Si(OR^{b})ᵣ(R^{c})₃₋ᵣ, wherein R^{a} stands for hydrogen or a linear or branched alkyl group containing 1 to 6 carbon atoms, OR^{b} stands for a hydrolysable group, R^{c} stands for a linear or branched alkyl group containing 1 to 6 carbon atoms and r stands for a number from 1 to 3.

6. Star-shaped polymers obtainable by reacting star-shaped alcohols with isocyanate compounds that carry a silyl group in the presence of salts of branched fatty acids.

7. The star-shaped polymers according to the previous claim, **characterized in that** the composition comprises less than 0.1 wt %, in particular less than 0.05 wt %, preferably less than 0.03 wt %, above all less than 0.02 wt % of catalyst.

8. The star-shaped polymers according to one of the previous claims, **characterized in that** at least 95 %, in particular at least 96 or 97 %, above all at least 98 or 99 %, particularly preferably all hydroxyl groups of the star-shaped alcohols were reacted with isocyanate compounds.

9. Composition comprising star-shaped polymers according to at least one of the claims 6 to 8.

## Revendications

1. Procédé pour la préparation de polymères en forme d'étoile par mise en réaction d'un alcool en forme d'étoile avec des composés d'isocyanates qui portent un groupe silyle, **caractérisé en ce qu'**on met en oeuvre pour la catalyse de la réaction, un sel d'acides gras ramifiés.

2. Procédé selon la revendication 1, **caractérisé en ce qu'**on met en oeuvre à titre de catalyseur un sel d'un acide gras ramifié en C₃-C₂₄ et les ions antagonistes du sel sont choisis parmi Zn(II) et Bi(III).

3. Procédé selon la revendication 1 ou 2, **caractérisé en ce que**, en ce qui concerne l'alcool en forme d'étoile, il s'agit d'un polymère en forme d'étoile comprenant des groupes hydroxyle périphériques.

4. Procédé selon la revendication précédente, **caractérisé en ce qu'**on met en oeuvre à titre d'alcool en forme d'étoile, des composés répondant à la formule Z(-X-A-Y-OH)ₘ,
dans laquelle
Z représente une unité centrale de ramification qui détermine le nombre maximal des branches des polymères en forme d'étoile ;
A représente une branche hydrophile du polymère ;
X et Y représentent, indépendamment l'un de l'autre, une liaison chimique ou un résidu organique bivalent à bas poids moléculaire contenant de préférence de 1 à 50, en particulier de 2 à 20 atomes de carbone ;
m représente un nombre de 3 à 500.000 et correspond de préférence au nombre de branches de Z ;
et les m groupes X-A-Y-OH peuvent posséder des significations différentes indépendamment les uns des autres.

5. Procédé selon l'une quelconque des revendications précédentes, **caractérisé en ce que**, en ce qui concerne le groupe silyle, il s'agit d'un groupe répondant à la formule générale -CR^{a}₂-Si(OR^{b})ᵣ(R^{c})₃₋ᵣ, dans laquelle R^{a} représente un atome d'hydrogène ou un groupe alkyle linéaire ou ramifié contenant de 1 à 6 atomes de carbone, OR^{b} représente un groupe hydrolysable, R^{C} représente un groupe alkyle linéaire ou ramifié contenant de 1 à 6 atomes de carbone et r représente un nombre de 1 à 3.

6. Polymères en forme d'étoile que l'on obtient par mise en réaction d'alcools en forme d'étoile avec des composés d'isocyanates qui portent un groupe silyle en présence de sels d'acides gras ramifiés.

7. Polymères en forme d'étoile selon la revendication précédente, **caractérisés en ce que** la composition contient moins de 0,1 % en poids, en particulier moins de 0,05 % en poids, de préférence moins de 0,03 % en poids, avant tout moins de 0,02 % en poids de catalyseur.

8. Polymères en forme d'étoile selon l'une quelconque des revendications précédentes, **caractérisés en ce qu'**on fait réagir au moins 95 %, en particulier au moins 96 ou 97 %, avant tout au moins 98 ou 99 %, de manière particulièrement préférée la totalité des groupes hydroxyle des alcools en forme d'étoile avec des composés d'isocyanates.

9. Composition comprenant des polymères en forme d'étoile selon l'une quelconque des revendications 6 à 8.
